# EUROPEAN PATENT APPLICATION

(11) **EP 4 167 071 A1**
(43) Date of publication of application: **19.04.2023**
(21) Application number: 21202707.2
(22) Date of filing: 14.10.2021
(51) Int. Cl.: G06F 3/14

(54) **CONNECTABLE DISPLAY TILE**

(71) Applicant: P-ton AG, 33609 Bielefeld (DE)
(72) Inventor: BRETTEL, Ingo, 33609 Bielefeld (DE); HASE, Jürgen, 33609 Bielefeld (DE); HASE, Jakob Lukas Tjorven, 33609 Bielefeld (DE)
(74) Representative: CMS Cameron McKenna Nabarro Olswang LLP

(57) **Abstract**

The present disclosure relates to a display tile, which can be connected to other display tiles to form a cohesive digital display. In a first aspect of the disclosed technology, there is provided a controller operable to receive one or more graphic models, the controller comprising a processor operable to render the one or more graphic models for display; one or more displays operable to present the rendered one or more graphic models to a user; and a connector on at least one edge of the tile.

## Description

The present disclosure relates to a display tile, which can be connected to other display tiles to form a cohesive digital display.

### BACKGROUND

Large digital displays are popular for a range of different applications, such as large displays in conferences, as outdoor displays for public viewing, cinema, concerts, as facade elements for buildings, or to display advertisements in public buildings like airports.

Some displays may be formed from light emitting diode (LED) video walls, which are built by combining smaller micro-LED panels, such as 160x160 millimetre panels. In such a way, the builder of such a display can create a custom setup matching the particular use case and location.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In a first aspect of the disclosed technology, there is provided a display tile for connecting with similar display tiles, comprising: a controller operable to receive one or more graphic models, the controller comprising a processor operable to render the one or more graphic models for display; one or more displays operable to present the rendered one or more graphic models to a user; and a connector on at least one edge of the tile.

Conventional panels used, for example in LED video walls, appear to have been built with a number of technologies that assumed that a team of professional technicians would build an installation that is either permanent, or if temporary has a lifetime that justifies the efforts of a complex installation where several technicians would work over several days to prepare the setup. The mechanical connections are built for very large and heavy setups, based on a sturdy frame structure, installation and alignment requires professional tools and special training of the assembly technicians.

Power supply distribution to these conventional panels is also usually built for very large setups that require very high brightness, for example outdoor displays. As such the power consumption of a setup is high, and needs a meticulous cabling, for example by combining several panels to a larger unit with an own power supply, and a dedicated distribution network between the power supplies of many units.

The data bus transporting the image/video data to the panels may be similarly complex. The panels in the conventional unit are generally interfaced with a special control board that needs an individual cable to each panel. Units are then connected using a different bus system to either a single concentrator, or a set of concentrators. These usually connect to special hardware that does splitting and preparation of video data for the panels. Individual cabling would go to each panel, assuming that there is lots of space available behind the installation to manage the cabling.

Comparable technologies that allow a user to show content on a larger, configurable amount of panels normally focus on video signal processing, instead of addressing ways in which the video signal was created in the first place. Conventional arrangements route the signal through a series of splitters, each dividing a single larger portion of the content into a number of smaller parts. The exact number of inputs/outputs, layers, mix with other video processing hardware etc. may vary. The conventional panels have no intelligence, they simply receive a pixel based video stream and assign round-robin each output pixel of their display technology with a video pixel.

The mechanical, power and data connections, as well as the setup and alignment procedures, required by conventional panels are not suitable for end users. By contrast, the arrangement provided allows for a permanent setup which is still comparable with hanging a picture frame to a wall in terms of complexity and tools needed. Temporary setups, for example which may be used to play just a quick game on them for less than an hour, may be provided by panel arrangements so simple that even children could safely build them within a minute.

Optionally, the display comprises one or more of: thin-film-transistor liquid-crystal display (TFT LCD); organic light-emitting diode (OLED); e-Paper, micro-LED; and/or vacuum fluorescent display (VFD).

These display arrangements can provide sufficiently robust and efficient means for providing a display to a user.

Optionally, the connector comprises: one or more alignment mechanisms; a power connection; and/or a data bus. Optionally, the or each alignment mechanism is arranged to urge the tile to a second tile by reducing the distance between the tiles, and hold the tiles together once aligned according to a predetermined standard. Optionally, the tile further comprises a hardware graphics engine arranged to accelerate rendering of the one or more graphic models for display. For smaller displays rendering of the one or more graphic models can be done entirely in software in the controller. For larger displays, there may be provided a dedicated hardware accelerator. Optionally, the connector is of a first type or a second type, and further wherein a connector of the first type is arranged to interface with a connector of the second type.

The tiles disclosed herein, created by the combination of features claimed, are display elements that become as flexible, creative, and easy to use as building bricks for children. The user can combine them and build larger complex display arrangements without the need of any special knowledge or tools. When placed on a horizontal surface like a floor or table, no tools at all are needed. For some arrangements, for example attaching tiles to a wall, only basic tools similar to those needed for hanging a picture frame are needed. The connectors with their different elements guide the user as to what constellations are possible. A human machine interface (HMI) model and bus system can automatically detect and adapt to any constellation the user build. While being very simple to build, the connectors can provide a very high mechanical stability and precision with a tile-to-tile alignment in some embodiments closer than one tenth of a millimetre. The distributed nature of the HMI model makes it possible to scale graphic compute power with the size of the tile arrangement, allowing complex computer graphics with a high frame rate to be rendered to the tiles.

In such a way, flexible tiled displays can now be assembled by the end user within a very short time, without the need for specialized tools or knowledge. The number of components needed for a tiled display setup are also significantly reduced, and allows for the removal of complex mechanical structures and cabling. This also provides the advantage of a much lower price point for a user, and reduces the space needed for a tiled display setup with a very thin build depth (<20mm in some embodiments) of a setup. Although in this embodiment wired data buses are provided for electronic communication between a plurality of panels and/or external equipment, it is anticipated that in other embodiments wireless data connections may be used for any or all aspects of electronic communication and/or power purposes.

Optionally, the arrangement further comprises a connection stripe, wherein the connection stripe comprises a plurality of connectors at least one of which is of a different type than the tile. Optionally, a plurality of edges of the tile comprise a connector. Optionally, the arrangement further comprises one or more decorative elements.

Two classes of decorative elements are provided: active and passive. Passive decorative elements only have a mechanical functionality, for example serving as a frame around the tiles. Hence they only interlock with the alignment mechanism of the connectors. By contrast, active decorative elements may serve a mechanical purpose similar to their passive variant, but have in addition an electronic functionality, that needs them to be connected to all components of the connectors including the power connection and data bus.

Optionally, the connection of the tile to a subsequent tile comprises arranging at least one side of the tiles adjacent or overlapping with each other.

Optionally, the overall shape of the tile is substantially square. A square provides an aesthetically pleasing tessellating shape, although other shapes may be available. For example, shapes such as a triangle, hexagon, etc. or more complex shapes are possible in other embodiments, either individually or in combination with similar or differently shaped tiles.

According to a further aspect, there is provided an assembly of tiles, comprising a plurality of interconnected tiles in electronic communication, wherein each tile comprises: a controller operable to receive one or more graphic models, the controller comprising a processor operable to render the one or more graphic models for display; one or more displays operable to present the rendered one or more graphic models to a user; and a connector on at least one edge of each tile.

Optionally, the assembly further comprises a bus system between each tile, the bus system comprising: a permanent power bus connection between all connectors; a plurality of bidirectional point-to-point connections between each tile and its direct neighbours; and a unidirectional high-speed bus, configurable by switches according to the requirements of the user.

Optionally, the assembly further comprises a central processor operable to create for each tile a graphic model, and upload each graphic model to the corresponding individual tile.

According to a further aspect, there is provided a method of coordinating a display view on a plurality of display tiles, comprising the steps of: receiving, via a central processor, a graphic model to be displayed; receiving, via the central processor, a set of tile identification codes from each of the plurality of display tiles, providing the identity and location of each tile in the plurality of display tiles; creating, for each of the plurality of display tiles, an individual graphic model associated with a specific tile identification code; and transmitting each of the individual graphic models to a controller within each of the corresponding one of the plurality of display tiles.

Many of the attendant features will be more readily appreciated as the same becomes better understood by reference to the following detailed description considered in connection with the accompanying drawings.

### BRIEF DESCRIPTION OF THE DRAWINGS

The present description will be better understood from the following detailed description read in light of the accompanying drawings, wherein:
FIG. 1 shows a tile operable to be connected to one or more similar tiles;
FIG.s 2A-D show exemplary tile arrangements;
FIG. 3 shows a connection arrangement;
FIG. 4 shows the connection arrangement of Figure 3 with decorative elements;
FIG. 5 shows a further connection arrangement;
FIG. 6 shows an exemplary alignment mechanism;
FIG.s 7A and 7B show exemplary flow charts for a tile-based display arrangement;
FIG. 8 shows a bus system for use in a tile;
FIG. 9 shows the bus system of Figure 8 when used for a plurality of tiles;
FIG. 10 shows a flow chart for the initialisation and running of the bus system; and
FIG.s 11A-D show exemplary arrangements for the location of a central processor.
Like reference numerals are used to designate like parts in the accompanying drawings.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

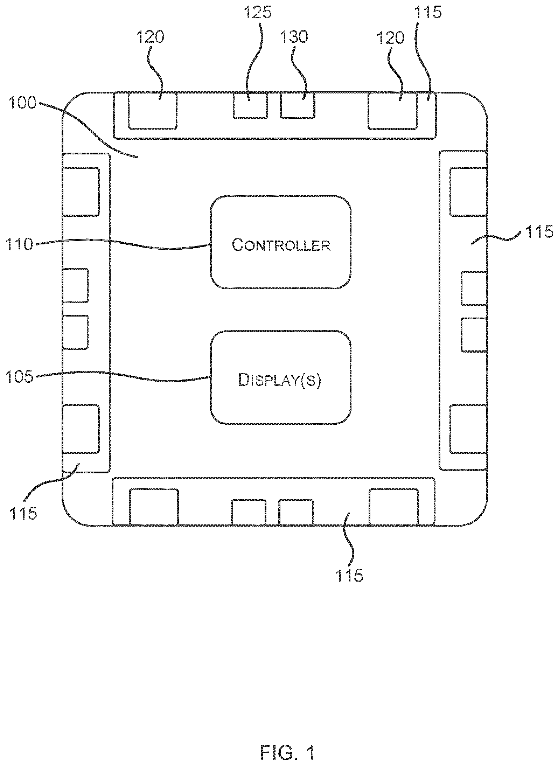

FIG. 1 shows a tile 100 operable to be connected to one or more similar tiles. A tile can resemble a geometric shape, such as a square like as shown in this Figure, but other either simple geometrical shapes like triangle, hexagon, etc. or more complex shapes are possible in other embodiments. Each tile comprises a surface that holds one or more displays 105 to show content to a user, driven by a controller 110 that prepares and draws any graphic content. Each controller comprises a processor and optionally an item of graphics acceleration hardware. The display(s) facing the user can encompass the whole surface of a tile, or just a part of it, and use any displaying technology including but not limited to TFT LCDs, OLED, e-Paper, micro-LED, VFD, etc.

Each tile also comprises one or more edges which are used to connect tiles with each other. The edge of a tile can connect with a neighbouring tile through a connector 115. The connector 115 can comprise a components alignment mechanism 120, a power connection 125, and/or a data bus 130. All physical edges of a tile or only a subset of the edges may be equipped with such a connector 115. A connector 115 may only have a single instance of each component, or multiple. In this Figure, the connector 115 is shown to comprise one power connection 125, one data bus 130, and two alignment mechanisms 120.

FIG.s 2A-D shows a series of exemplary tile arrangements. Tiles can be used either as stand-alone devices, or multiple tiles can be attached to each other through their connectors. The arrangement of multiple tiles is flexible and can be decided by the user. An arrangement can be built with multiple tiles of a single kind, or it can be a mix of different tile shapes and sizes, as long as their connectors are compatible with each other.

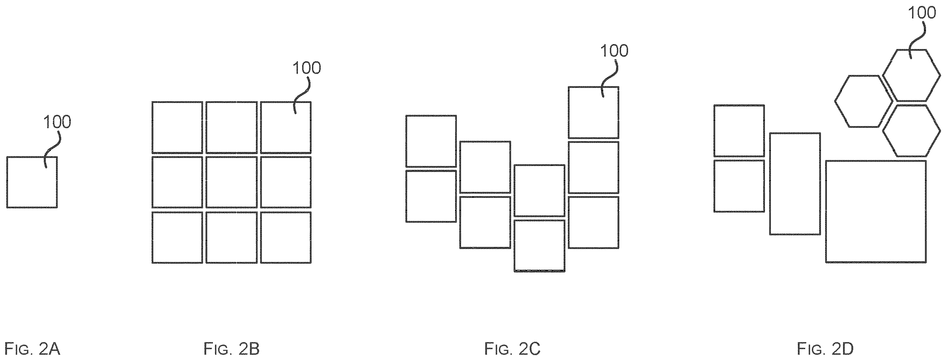

Specifically, each of Figures 2A-D shows a different way in which one or more tiles 100 may be arranged. In Figure 2A, only a single, square-shaped tile 100 is used. This may be sufficient for a user's needs, for example for a smaller display, or for when the display is only for a single viewer. Figure 2B shows arrangement of multiple square-shaped tiles 100, tessellated to form a larger square display. Figure 2C also shows an arrangement of multiple square-shaped tiles 100, but in this example are tessellated to form an irregularly shaped display, for example as part of an artistic display.

Figure 2D shows an arrangement of a plurality of tiles 100, comprising tiles 100 of four different shapes, including: two smaller square tiles, a rectangular tile, a larger square tile, and three hexagonal tiles. As demonstrated in this Figure, each tile in a display comprising a plurality of tiles does not need to be identical. Different types and shapes of tile may be interconnected to form a combined display which has a greater total display size than any of the individual tiles.

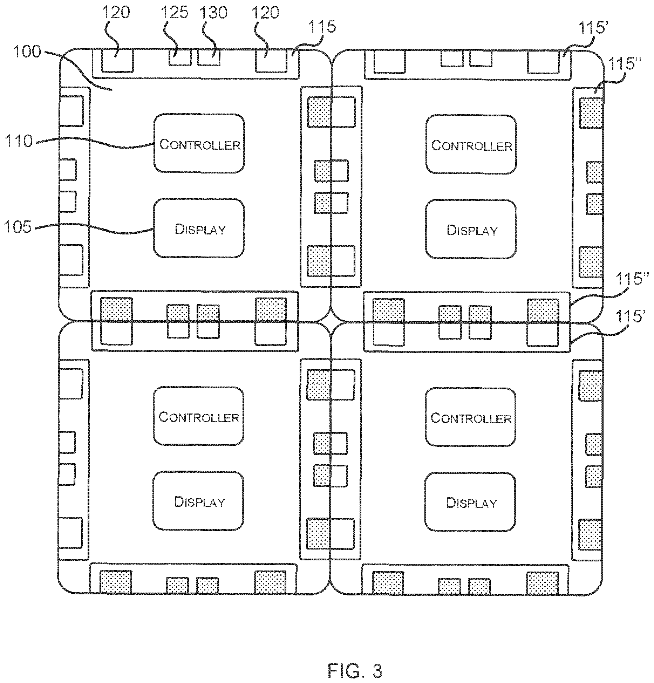

FIG. 3 shows a connection arrangement, referred to herein as connection variant 1. In this embodiment, the connectors 115 allowing for the interconnectivity of the tiles 100 follow a binary approach, and use one of two sets of connection ports referred to as "A" 115' and "B" 115". To connect the tiles with each other, each tile is either placed directly next to tile to which it is to be attached, or they could also overlap each other, dependent on the orientation and arrangement of the connector 115 in the 3-dimensional space. The fitting of connection ports of set A 115' with connection ports of set B 115" allows for the connection of tiles either directly with each other, or through a connection stripe as described in further detail below.

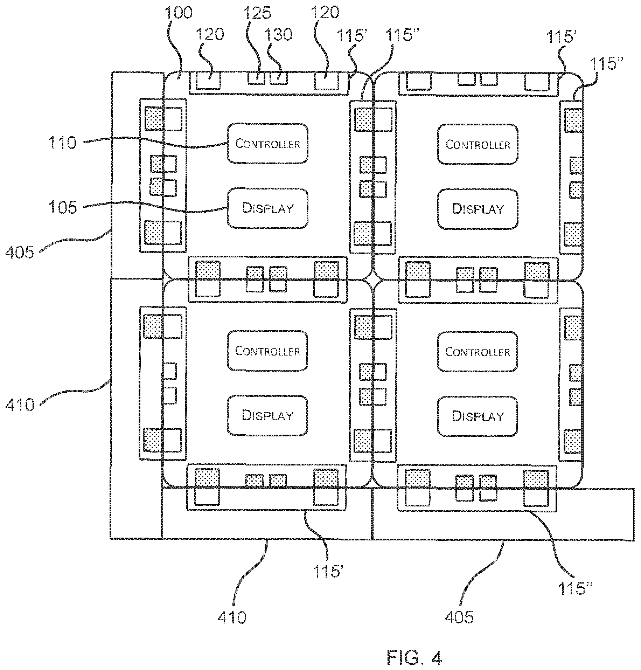

FIG. 4 shows the connection arrangement of Figure 3 with decorative elements. The connection ports 115', 115" allow for the attachment of these decorative elements to the tiles 100. The decorative elements may comprise one of two forms: active decorative elements 405, or passive decorative elements 410.

A passive decorative element 410 comprises a connector 115 with connection ports of set B 115". Such a passive decorative element 410 may then be connected to the side of a tile 100 with connection ports of set A 115'. Passive decorative elements 410 have only a mechanical functionality, for example serving as a frame around one or more tiles 100. Hence, they only interlock with the alignment mechanism of the connectors 115.

By contrast, an active decorative element 405 comprises a connector 115 with connection ports of set A 115'. Such an active decorative element 405 may then be connected to the side of a tile 100 with connection ports of set B 115". Active decorative elements 405 may serve a mechanical purpose similar to their passive variant 410, but have in addition an electronic functionality, that requires connection to all components of the connectors 115 including the power connection 125 and data bus 130.

The passive decorative element 410 may alternatively comprise a connector 115 with ports of set A 115', interlocking only with a corresponding alignment mechanism of set B 115". The active decorative element 405 may alternatively comprise a connector 115 with ports of set B 115", requiring connection to all set A 115' components of the a connector 115 including the power connection 125 and data bus 130.

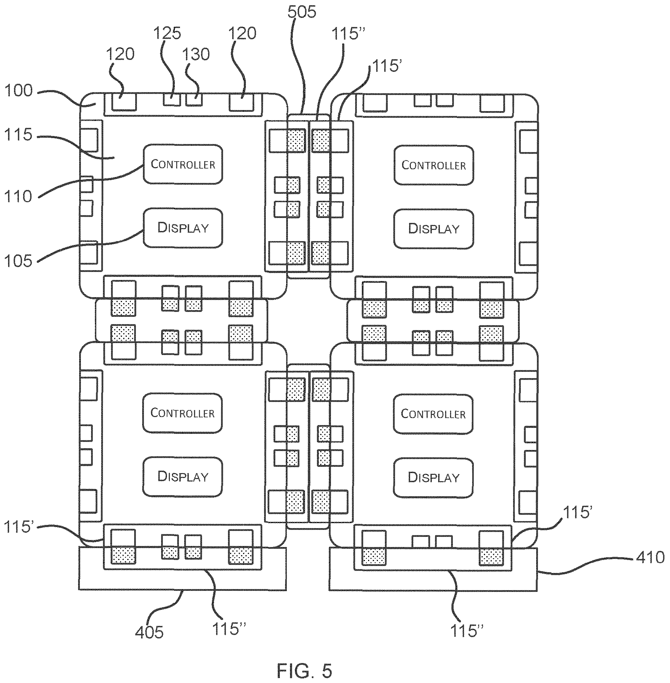

FIG. 5 shows a further connection arrangement, comprising a connection stripe 505. In this embodiment, the tiles 100 are each surrounded by connectors 115 with connection ports of set A 115'. In order for the tiles 100 to be fitted together to form a larger assembly, complementary connection ports of set B 115" are required. These are provided on either side of a connection stripe 505.

In this embodiment, the tiles 100 only have connectors 115 comprising connection ports of set A 115'. The connection stripe 505 has a set of connectors 115 comprising connection ports of set B 115", which can be electrically connected within the connection stripe 505 itself. Alternative embodiments are possible, for example wherein the tiles 100 only have connectors 115 comprising connection ports of set B 115", and the connection stripe 505 has a set of connectors 115 comprising connection ports of set A 115'.

Each connection stripe 505 may be placed between two tiles 100, and serve to attach the tiles together by placing the connection stripe 505 between them. The tiles 100 may be placed either next to each other, or they may overlap with each other, dependent on the orientation of the connectors 115 in the 3-dimensional space. In addition, one or more decorative elements 405, 410 may be connected to one or more of the tiles 100.

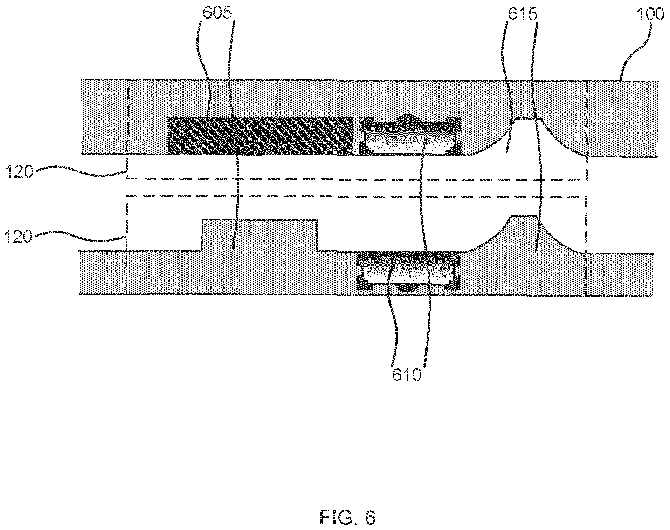

FIG. 6 shows an exemplary alignment mechanism 120. In this close-up view, it is shown that the alignment mechanism 120 is a 3-dimensional structure which can comprise the use of different shapes and mechanisms to connect two elements. This connection may involve linkage between the following elements: a first tile 100 and a second tile 100, a tile 100 to a connection stripe 505, and/or a tile 100 to a decorative element 405, 410.

The connection provided by the alignment mechanism 120 may comprise the following characteristics:

While the two elements are at larger distance to each other, the mating margin of the alignment mechanism 120 may be larger. In such a case, the user has to bring the elements only roughly next to each other in order for a connection to be formed.

When the two elements are fully mated with each other, the tolerance of their position to each other may be significantly reduced. In this way, more precise alignment between the elements is achieved.

From a larger distance to fully mated, the mating tolerance can be arranged to gradually decrease. The two elements can bias the movement together in the direction to increase their alignment with closer distance. In such a way, there is provided a mechanism that encourages the distance between the elements to be reduced, pulling them together, and holding them together once they are fully aligned.

Each element can use a single alignment mechanism 120, or multiple. In the embodiment of this Figure, there is provided a close-up view of a single alignment mechanism 120 comprising three components. Each of the elements guides the mating of two elements in one space dimension, while it is flexible in the other 2 dimensions.

The first component is a key/lock pair 615, comprising two mechanical shapes. The meeting of these shapes when a connection is to be made applies the key principle that the mating tolerance in decreases when distance between the two elements decreases in a first spatial dimension. The same principle applies to the second component but in a second spatial dimension, and is applied by another key/lock pair 605.

The third component is a magnet pair 610 which provides a strong pulling force in a third spatial dimension. In such a way, the magnet pair 610 decreases the distance between the two elements in the third spatial dimension, while the key/lock pairs 605, 615 decrease the mating tolerance in the first and second spatial dimensions.

For the user the result is that they only need to bring the two elements into rough alignment with each other in order for a connection to be made. At that position, the magnet pair 610 pulls the elements together, achieving automatically precise alignment. To separate the elements, the user can pull against the magnetic force provided by the magnet pair 610.

It is anticipated that other embodiments of the or each alignment mechanism 120 may comprise zero, one, or a plurality of each of the abovementioned components, as long as at least one component in total is provided. For example, one embodiment of the alignment mechanism 120 can comprise only a magnet pair 610. A different embodiment of the alignment mechanism 120 can comprise a magnet pair 610, one or more key/lock pairs 615, and/or one or more of the key/lock pairs 605 of an alternative spatial dimension.

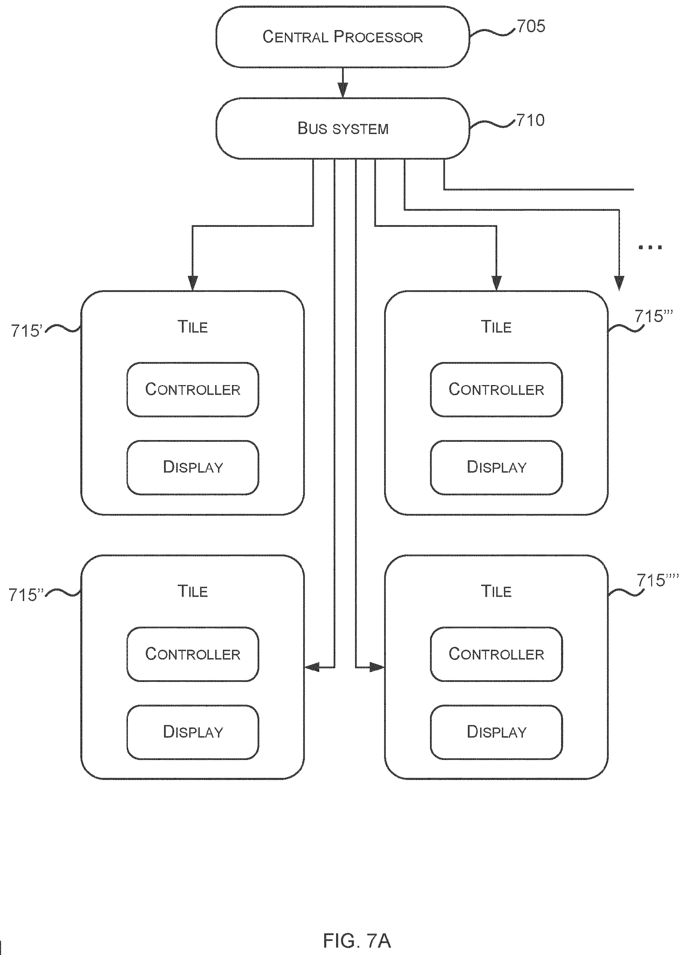

FIG. 7A shows a flow chart for a tile-based display arrangement. Conventional technologies that allow a user to show content on a larger, configurable number of panels focus on video signal processing, and do not address the ways in which the video signal was created in the first place. In such technologies, the signal is routed through a series of splitters, each dividing a single larger portion of the content into a number of smaller parts. Their exact number of inputs/outputs, layers, mix with other video processing hardware etc. may vary.

In this conventional approach, the panels themselves may be considered to have no intelligence. Each panel receives a pixel based video stream and assigns in a round-robin style each output pixel of their display technology with a video pixel. This approach is common for LCD video walls that usually use larger panels, as well as for LED video walls that use smaller panels.

By contrast, in the arrangement as disclosed herein, the or each of the tiles themselves play a central role in the graphical rendering of the display content. A central processor 705 runs the business logic and data of an application. The central processor 705 creates for each tile a graphic model, but it does not run the graphical model. Instead, the central processor 705 uploads each graphic model to an individual tile via a bus system in step 710. As shown in steps 715', 715", 715"', 715"", each tile comprises its own controller, optionally including graphics acceleration hardware, which is used to run the graphic model locally and render the pixel data for the display of a tile. The graphics acceleration hardware may be used to accelerate rendering of the one or more graphic models for display so as to increase the quality of the display to a user, for example by improving image quality and/or reducing unwanted noise in images.

The central processor 705 interacts with the graphic models running on the tiles through events. The central processor can modify a running graphic model on a tile, or replace it with a new graphic model.

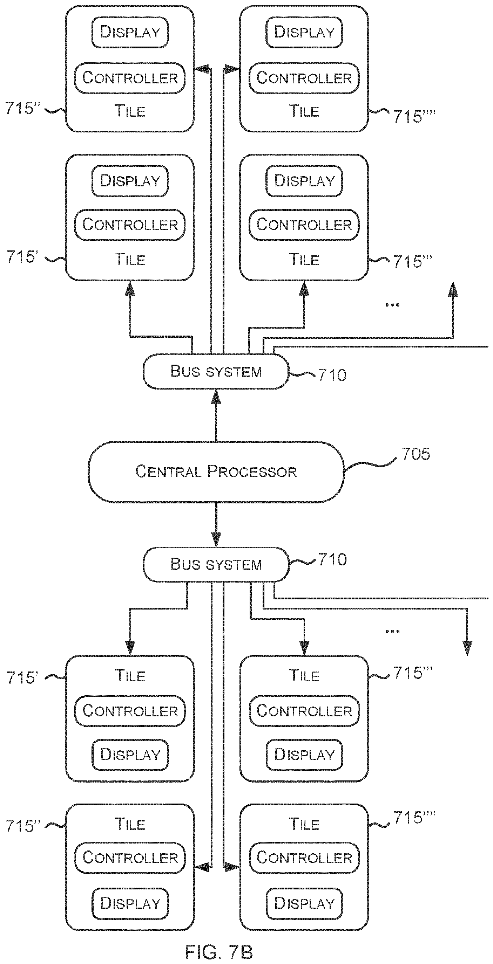

FIG. 7B shows an alternative embodiment to the arrangement of FIG. 7A, in which the central processor 705 drives multiple assemblies. The or each of the multiple assemblies driven by the single central processor 705 may be physically independent from each other, and in electronic communication with the central processor 705 by a cable or by an alternative wireless means.

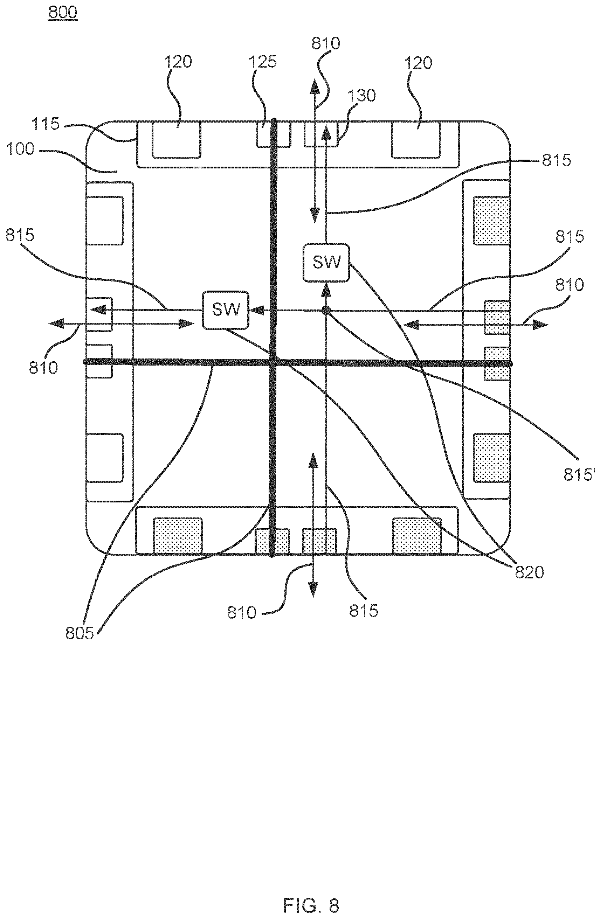

FIG. 8 shows a bus system 800 for use in a tile. The bus system 800 between the tiles was designed to satisfy the requirements of: providing a reliable power distribution, implementing a high-speed bus for distribution of graphic models from the central controller to the tiles 100; and implementing point-to-point connections between tiles 100 to detect the individual setup the user build and exchange events directly between tiles 100.

The heavier lines 805 represent a permanent power bus connection between all tile connectors 115. The double-ended arrows 810 represent bidirectional point-to-point connections between a tile 100 and all its directly neighbouring tiles. The number of connections depends on the shape of the tile. For example, a hexagonal tile may have up to six directly neighbouring tiles, whilst a square tile may only have up to four directly neighbouring tiles.

The single-ended arrows 815 represent high-speed unidirectional bus lines, configurable by switches 820 to match the individual setup build by the user. The location of any input/output points and/or switches depends on the shape of the tile. The point 815' represents an electrical connection between the high-speed unidirectional bus lines of arrows 815, even though they may not physically cross paths.

In this embodiment, and in the plan view of this figure, the right and lower parts of the tile 100 are inputs, and the left and top parts are outputs. The switches 820 allow the or each tile to decide if it forwards the high-speed unidirectional bus lines 815 bus to left/top from the right/lower side, or switch that part of the bus off and so eliminate that particular means of electronic communication.

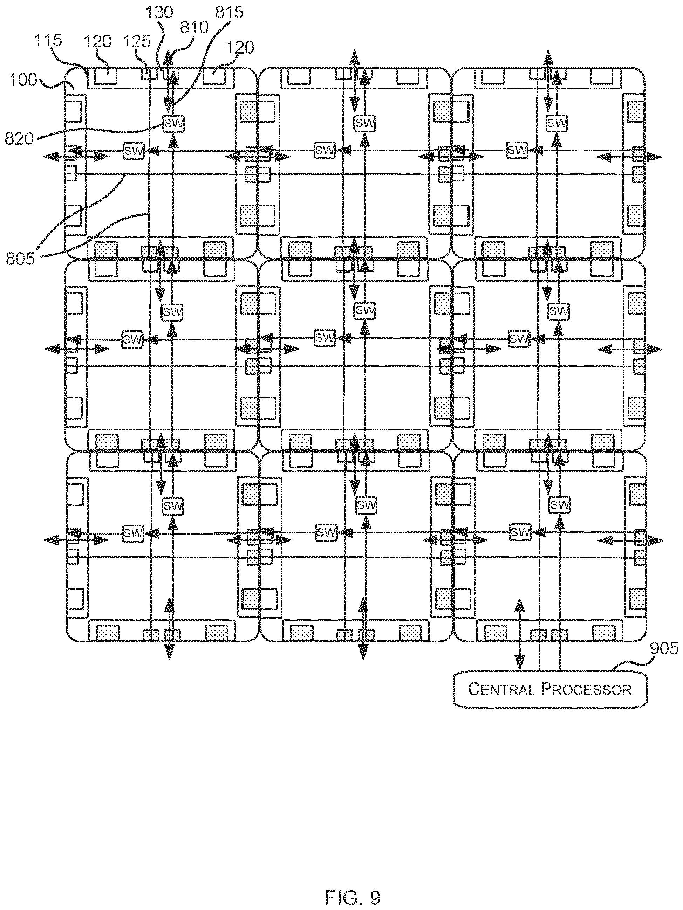

FIG. 9 shows the bus system 800 when used for a plurality of tiles 100. A central processor 905 is arranged to initialise the tiles 100 with their respective tile bus systems 800. The central processor 905 is further operable to prepare and coordinate content for the tiles 100, and interface with other systems either local or remote. Such systems may include one or more of: sensors, electronic devices, mobile applications (which may be referred to as "apps"), and/or digital cloud systems.

The location of the central processor 905 is flexible. It is appreciated that the central processor 905 may be placed anywhere in electronic communication with at least one tile 100, and/or within one tile 100.

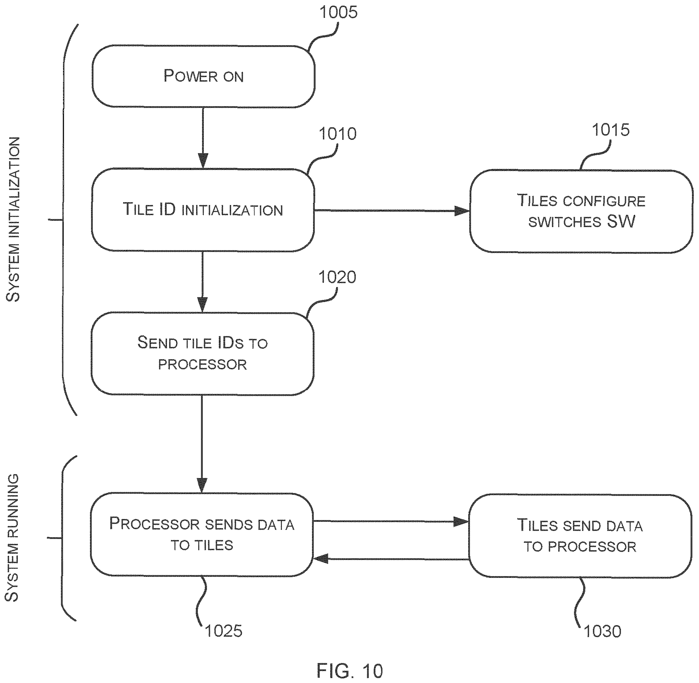

FIG. 10 shows a flow chart for the initialisation and running of the bus system. The system may be considered as two main phases: the system initialisation phase, and the system running phase. During the "system initialisation" phase, the arrangement is powered on in step 1005. The or each tile identification is recorded in step 1010, and the or each switch 820 within the or each tile is configured in step 1015. The or each tile identification is then passed to the central processor in step 1020. This completes the system initialisation phase.

The step 1020 of passing the or each tile identification to the central processor leads to the step 1025 of the central processor sending data to the tiles in order for the display to be represented as desired by a user. This step is linked bidirectionally with step 1030, wherein the or each of the tiles is operable to send data back to the central processor.

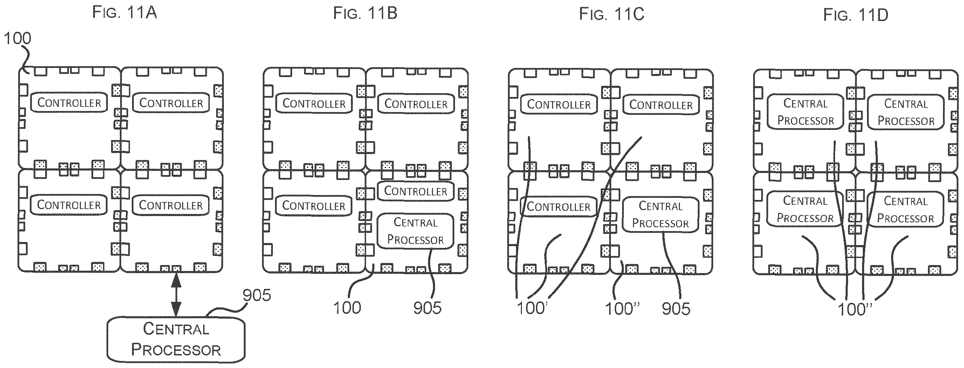

FIG.s 11A-D show exemplary arrangements for the location of a central processor. The arrangement of Figure 11A may be referred to as the "external processor" arrangement. The central processor 905 is an external part, in electronic communication and attached directly or through a cable to the tile bus.

The arrangement of Figure 11B may be referred to as the "internal processor" arrangement. In this arrangement, the central processor 905 is placed within one tile 100, for example as a module that can be added to the tile 100.

The arrangement of Figure 11C may be referred to as the "master tile" arrangement. This arrangement uses two different kind of tiles, a number of follower tiles 100' that function like normal tiles, and a leader tile 100" that uses a hardware different from the follower tiles 100' and takes over the role of the central processor 905.

The arrangement of Figure 11D may be referred to as the "master role" arrangement. In this arrangement, all tiles 100" are equipped with the same hardware. The role of the central processor is assigned by software only. The roles can be assigned statically, for example by one tile having a different software, or by the software checks during start-up including a particular setting, e.g. a master switch.

Alternatively, the role of each tile 100" can be assigned dynamically. In such an embodiment, during start-up all tiles communicate with each other, and dependent on the layout or other factors one tile assumes the role of central processor.

Alternatively, or in addition, the functionality described herein is performed, at least in part, by one or more hardware logic components. For example, and without limitation, illustrative types of hardware logic components that are optionally used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs).

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term "comprising" is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

The configurations described above enable various methods for providing user input to a computer system. Some such methods are now described, by way of example, with continued reference to the above configurations. It will be understood, however, that the methods here described, and others within the scope of this disclosure, may be enabled by different configurations as well.

## Claims

1. A display tile for connecting with similar display tiles, comprising:
a controller operable to receive one or more graphic models, the controller comprising a processor operable to render the one or more graphic models for display;
one or more displays operable to present the rendered one or more graphic models to a user; and
a connector on at least one edge of the tile.

2. The tile of claim 1, wherein the display comprises one or more of: thin-film-transistor liquid-crystal display (TFT LCD); organic light-emitting diode (OLED); e-Paper, micro-LED; and/or vacuum fluorescent display (VFD).

3. The tile of any preceding claim, wherein the connector comprises: one or more alignment mechanisms; a power connection; and/or a data bus.

4. The tile of claim 3, wherein the or each alignment mechanism is arranged to urge the tile to a second tile by reducing the distance between the tiles, and hold the tiles together once aligned according to a predetermined standard.

5. The tile of any preceding claim, further comprising a hardware graphics engine arranged to accelerate rendering of the one or more graphic models for display.

6. The tile of any preceding claim, wherein the connector is of a first type or a second type, and further wherein a connector of the first type is arranged to interface with a connector of the second type.

7. The tile of claim 6, further comprising a connection stripe, wherein the connection stripe comprises a plurality of connectors at least one of which is of a different type than the tile.

8. The tile of any preceding claim, wherein a plurality of edges of the tile comprise a connector.

9. The tile of any preceding claim, further comprising one or more decorative elements.

10. The tile of any preceding claim, wherein the connection of the tile to a subsequent tile comprises arranging at least one side of the tiles adjacent or overlapping with each other.

11. The tile of any preceding claim, wherein the overall shape of the tile is substantially square.

12. An assembly of tiles, comprising a plurality of interconnected tiles in electronic communication, wherein each tile comprises:
a controller operable to receive one or more graphic models, the controller comprising a processor operable to render the one or more graphic models for display;
one or more displays operable to present the rendered one or more graphic models to a user; and
a connector on at least one edge of each tile.

13. The assembly of claim 12, further comprising a bus system between each tile, the bus system comprising:
a permanent power bus connection between all connectors;
a plurality of bidirectional point-to-point connections between each tile and its direct neighbours; and
a unidirectional high-speed bus, configurable by switches according to the requirements of the user.

14. The assembly of claim 12 or claim 13, further comprising a central processor operable to create for each tile a graphic model, and upload each graphic model to the corresponding individual tile.

15. A method of coordinating a display view on a plurality of display tiles, comprising the steps of:
receiving, via a central processor, a graphic model to be displayed;
receiving, via the central processor, a set of tile identification codes from each of the plurality of display tiles, providing the identity and location of each tile in the plurality of display tiles;
creating, for each of the plurality of display tiles, an individual graphic model associated with a specific tile identification code; and
transmitting each of the individual graphic models to a controller within each of the corresponding one of the plurality of display tiles.
